Europäisches Patentamt

European Patent Office

Office européen des brevets

(11) Veröffentlichungsnummer: **0 354 374 B1**

# EUROPÄISCHE PATENTSCHRIFT

(45) Veröffentlichungstag der Patentschrift: **30.12.92**

(21) Anmeldenummer: **89112819.1**

(22) Anmeldetag: **13.07.89**

(51) Int. Cl.⁵: **C09C 1/00**

(54) **Plättchenförmige Farbglanzpigmente.**

(30) Priorität: **21.07.88 DE 3824809**

(43) Veröffentlichungstag der Anmeldung:
**14.02.90 Patentblatt 90/07**

(45) Bekanntmachung des Hinweises auf die
Patenterteilung:
**30.12.92 Patentblatt 92/53**

(84) Benannte Vertragsstaaten:
**BE CH DE ES FR GB IT LI NL**

(56) Entgegenhaltungen:
**EP-A- 0 082 985**
**EP-A- 0 220 509**
**US-A- 3 767 443**

**CHEMICAL ABSTRACTS, Band 85, Nr. 10, 6.
September 1976, Seite 114, Zusammenfassung Nr. 64905m, Columbus, Ohio, US; &
JP-A-76 30 829 (NIHON KOKEN KOGYO CO.,
LTD) 16-03-1976**

**CHEMICAL ABSTRACTS, Band 102, Nr. 14,
April 1985, Seite 94, Zusammenfassung Nr.
115231t, Columbus, Ohio, US; & JP-A-59 170
151 (SANYO COLOR WORKS, LTD)
26-09-1984**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Franz, Klaus-Dieter, Dr.
Insterburger Strasse 12
W-6233 Kelkheim(DE)**
Erfinder: **Ambrosius, Klaus, Dr.
Waldschmidtstrasse 65
W-6000 Frankfurt am Main(DE)**
Erfinder: **Prengel, Constanze, Dr.
Mainzerstrasse 14
W-6108 Weiterstadt(DE)**

**Beschreibung**

Die Erfindung betrifft plättchenförmige Farbglanzpigmente auf der Basis von mit Metalloxiden beschichteten plättchenförmigen Substraten.

Es ist bekannt, plättchenförmige Substrate wie z.B. Glas, Glimmer, Graphit oder Metallplättchen mit einer dünnen Schicht von einem oder mehreren Metalloxiden zu überziehen. Aufgrund der Plättchenstruktur, der glatten homogenen Oberfläche und des hohen Brechungsindex dieser Metalloxide erhält man dabei Pigmente, die einen hohen Glanz aufweisen und die neben der Eigenfarbe des aufgebrachten Metalloxids gegebenenfalls auch, je nach Schichtdicke der Metalloxidschicht, die Interferenzfarbe dünner Plättchen zeigen. Eine breite Beschreibung solcher Glanzpigmente findet sich z.B. in den US-Patenten 30 87 828 und 30 87 829 sowie zahlreichen weiteren Patenten und Patentanmeldungen.

Obwohl mit den bekannten Verfahren zahlreiche Farbtöne erzeugt werden können, besteht sowohl für Anwendungen in der Kosmetik als auch in der Technik ein Bedürfnis nach Pigmenten mit interessanten neuen Farben und Eigenschaftsprofilen.

Es wurde nun überraschend gefunden, daß eine Beschichtung von plättchenförmigen Substraten mit teiltransparenten farbigen Schichten von Oxidbronzen möglich ist, wobei Pigmente mit interessanten neuen Eigenschaften erhalten werden.

Gegenstand der Erfindung sind daher plättchenförmige Farbglanzpigmente auf der Basis von mit Metalloxiden beschichteten plättchenformigen Substraten, die dadurch gekennzeichnet sind, daß die Metalloxidbeschichtung zumindest teilweise aus einer Oxidbronze der Formel $M_xTO_n$, worin M zumindest ein elektropositives Metallelement der I., II., III. oder IV. Hauptgruppe oder der I., II. oder III. Nebengruppe, T zumindest ein Übergangselement der IV. V., VI., VII. oder VIII.Nebengruppe, x eine Zahl zwischen 0,01 und 1 und n eine Zahl zwischen 2 und 6 ist.

Gegenstand der Erfindung ist auch ein Verfahren zur Herstellung von plättchenförmigen Farbglanzpigmenten, das dadurch gekennzeichnet ist, daß ein plättchenförmiges Substrat mit einer Oxidbronze der Formel $M_xTO_n$, worin M zumindest ein elektropositives Metallelement der I., II., III. oder IV. Hauptgruppe oder der I., II. oder III. Nebengruppe, T zumindest ein Übergangselement der IV., V., VI., VII. oder VIII.Nebengruppe, x eine Zahl zwischen 0,01 und 1 und n eine Zahl zwischen 2 und 6 ist., beschichtet wird.

Die Oxidbronzen an sich sind zum Teil schon sehr lange bekannt. Eine Übersicht findet sich z.B. in Comprehensive Inorganic Chemistry, Vol. 4, S. 541-605, Pergamon Press, 1973. Auch in MTP Intern. Rev. Science, Inorganic Chemistry, 2nd Series, Vol. 10 (1975) findet sich auf den Seiten 211-254 eine Übersicht über Oxidbronzen. Auf S. 212 im zweiten Absatz ist die Zusammensetzung von komplizierter gebauten Bronzen erläutert, die jeweils mehrere Elemente M und T enthalten können. Auch diese Bronzen sollen von der oben angegebenen Formel umfaßt sein. Die Aufbringung solcher Verbindungen in dünner Schicht auf einen Träger war bisher jedoch noch nicht erwogen worden.

Die erfindungsgemäßen Pigmente zeigen eine breite Variation von Farben, die zum einen durch die Auswahl des elektropositiven Metalls M und des Übergangselements T, und zum anderen durch die äquivalente Menge x des Metall M bestimmt wird.

Als Übergangsmetalle T sind insbesondere Wolfram, Molybdän, Niob, Vanadium, Titan und Mangan zu nennen, von denen Wolfram und Titan besonders bevorzugt sind. Geeignete elektropositive Metalle M sind im Prinzip alle, die bevorzugt die formalen Oxidationsstufen $1^+$, $2^+$, $3^+$ und $4^+$ einnehmen, d.h. die Elemente der I., II., III. und IV. Hauptgruppe und der I., II. oder III. Übergangsgruppe. Insbesondere werden aber Lithium, Natrium, Kalium, Kupfer, Silber, Calcium, Strontium, Barium, Zink, Cadmium, Aluminium, Indium, die Lanthaniden und $NH_4^+$ als Pseudoalkalikation eingesetzt. Besonders bevorzugt sind Natrium, Kalium, Calcium und Barium.

Die Absorptionsfarbe der Oxidbronze wird wesentlich durch den Anteil des elektropositiven Metalls M bestimmt. Durch Variation dieses Anteils kann die Farbe in weiten Bereichen variiert werden. Der das Verhältnis von M zu T angebende Parameter x ist dabei unterschiedlich, je nach der Hauptwertigkeit des Elements M. Für Elemente der I. Haupt- und Nebengruppe liegt er bevorzugt zwischen 0,1 und 1, für Elemente der II. Haupt- und Nebengruppe zwischen 0,05 und 0,5 für Elemente der III. Haupt- und Nebengruppe zwischen 0,01 und 0,3 und für Elemente der IV. Hauptgruppe zwischen 0,01 und 0,2.

Erfindungsgemäß werden diese Oxidbronzen auf ein plättchenförmiges Substrat aufgebracht. Als Substrat eignen sich im Prinzip alle festen temperaturbeständigen Materialien, die als dünne Plättchen zur Verfügung stehen, d.h. bevorzugt bei einer Dicke von etwa 0,1-1 μm eine Ausdehnung in den beiden anderen Dimensionen von etwa 5-200 μm, insbesondere etwa 10-50 μm, besitzen. Geeignet sind beispielsweise Glimmer, Glas, Metalle oder plättchenförmige Kristalle der Eisenoxide und deren Mischkristalle z.B. mit Aluminium, Zink oder Mangan.

Geeignet sind jedoch auch solche plättchenförmige Substrate, die bereits mit einer Metalloxidschicht überzogen sind wie z.B. die als Perlglanzpigmente bekannten metalloxidbeschichteten Glimmerschuppen, die z.B. in den Patenten US 30 87 828, US 30 87 829, DE 22 14 545 und DE 25 22 572 beschrieben sind. Als Metalloxide sind dort insbesondere genannt Titandioxid, Zirkoniumdioxid, Zinndioxid, Eisenoxid, Chromoxid, Zinkoxid, Siliciumdioxid und Aluminiumoxid.

Die Oxidbronzen werden auf diese Substrate in der Regel in Mengen von etwa 0,1-200 Gew.% bezogen auf das Ausgangsmaterial aufgebracht, vorzugsweise in einer Menge von etwa 1-100 %. Die Endprodukte enthalten also etwa 0,1-66 %, vorzugsweise 1-50 % der Oxidbronzen. Insbesondere werden Gehalte von etwa 5 bis 35 Gew.% verwendet.

Die Darstellung der Oxidbronzen als dünne Schicht auf den plättchenförmigen Substraten orientiert sich an den auch für die Reindarstellung der Oxidbronzen bekannten Verfahren, die in Comprehensive Inorganic Chemistry (s. oben) und der dort zitierten Literatur beschrieben sind. Besonders vorteilhaft sind Verfahren, bei denen die Ausgangsmaterialien zur Bildung der Oxidbronzen auf den plättchenförmigen Substraten abgeschieden werden und diese bei erhöhter Temperatur zu den Oxidbronzen umgesetzt werden.

So kann beispielsweise ein Salz der Formel $M_m TO_n$ mit einem Oxid der Formel $T'O_x$ und einem Metall $T''$ umgesetzt werden, wobei $T = T' = T''$ oder $T \neq T' \neq T''$ sein kann, oder es können Mischungen von Übergangsmetalloxiden $TO_n$ mit Oxiden $M_2^I O$, $M^{II}O$, $M_2^{III} O_3$ oder $M^{IV}O_2$ oder Salzen $M_m TO_n$ bei erhöhter Temperatur von etwa 300-1200 °C, vorzugsweise etwa 400-900 °C in einer reduzierenden Gasatmosphäre, z.B. einer Wasserstoffatmosphäre, gegebenenfalls in Mischung mit einem Inertgas, wie z.B. Stickstoff, reduziert werden. Durch Veränderung der relativen Mengen des Salzes $M_m TO_n$ bzw. M-Oxid zu dem Übergangsmetalloxid $TO_n$ kann auf einfache Weise der Faktor x der Oxidbronze $M_x TO_n$ vorherbestimmt werden.

Die Ausfällung der Oxidgemische kann dabei in Wasser oder in mit Wasser verdünnten organischen Phasen gleichzeitig oder nacheinander erfolgen. Dabei können selbstverständlich auch mehrere elektropositive Metalle M bzw. Übergangsmetallelemente T gemeinsam zum Einsatz kommen. In Fällen, in denen das elektropositive Metall M kein schwerlösliches Oxid bzw. Hydroxid bildet, wie z.B. im Falle von Elementen der I. und II. Hauptgruppe kann M auch als schwerlösliches Salz einer einfachen organischen Säure gefällt werden, z.B. aus 1:1 Gemischen von Alkohol mit Wasser. So kann beispielsweise Natrium als Oxalat oder Acetat gefällt werden, das sich beim anschließenden Glühen zersetzt, wobei sich der jeweilige Säurerest unter Bildung gasförmiger Reaktionprodukte verflüchtigt.

Zum Ausfällen der Ausgangsmaterialien werden die plättchenförmigen Substrate zweckmäßig in Wasser oder einem mit Wasser verdünnten organischen Lösungsmittel suspendiert, und es wird durch Zugabe der Reagenzien bei für die Ausfällung geeigneten pH- und Temperaturbedingungen eine Ausfällung der Salze bzw. Oxide bewirkt, die sich auf den in der Suspension verteilten plättchenförmigen Substraten niederschlagen. Die dafür jeweils notwendigen Bedingungen sind dem Fachmann bekannt und können aus den einschlägigen Lehrbüchern entnommen werden.

Nach der Auffällung der Ausgangsmaterialien werden die Pigmente zweckmäßig abgetrennt, gegebenenfalls gewaschen und danach für etwa 0,5 bis etwa 3 Stunden in einer reduzierenden Gasatmosphäre geglüht. Als reduzierendes Gas ist insbesondere Wasserstoff zu nennen, es sind jedoch auch andere Gase wie z.B. Ammoniak oder Methan einsetzbar. In der Regel werden die reduzierenden Gase in Mischung mit einem Inertgas wie z.B. Stickstoff eingesetzt.

Nach dem Abkühlen sind die Pigmente in ihrer Zusammensetzung stabil und können für die üblichen Zwecke, wie z.B. zur Pigmentierung von Kunststoffen, Lacken, Farben und Kosmetika eingesetzt werden. Aufgrund der bekannten Eigenschaften der Oxidbronzen als elektrische Leiter oder Halbleiter eröffnen sich zahlreiche Möglichkeiten für spezielle Anwendungen, in denen solche Eigenschaften vorteilhaft eingesetzt werden können.

Beispiel 1

Zu einer Suspension von 50 g Iriodin 103 (ein silberweißes Perlglanzpigment der Fa. E. Merck, Darmstadt, bestehend aus mit Titandioxid beschichtetem Glimmer einer Teilchengröße von 10-50 $\mu$m) in 2 l Wasser, die auf 95 °C erwärmt und mit 10 %iger Salzsäure auf einen pH-Wert von 1,5 eingestellt ist, werden innerhalb von 2 Stunden 250 ml einer wässerigen Lösung von 28 g (0,085 mol) $Na_2 WO_4 \times 2 H_2O$ und 5 g (0,125 mol) Natriumhydroxid zudosiert, wobei der pH-Wert durch gleichzeitige Zugabe wässeriger Salzsäure konstant gehalten wird. Danach wird noch etwa 15 Minuten bei Siedehitze und etwa 5 Stunden unter langsamem Abkühlen nachgerührt. Das auf diese Weise mit $(WO_3)_x$ beschichtete Pigment wird abgetrennt und gewaschen.

5 g eines auf solche Weise mit 22,5 % $(WO_3)_x$ belegten Pigments werden in 25 ml Wasser suspendiert und bei einem pH-Wert von 4,6 mit einer Lösung von 0,33 g (2,46 mmol) Natriumoxalat versetzt. Danach wird mit 1 %iger Natronlauge ein pH-Wert von 6,0 eingestellt und es werden zur Ausfällung von Natriumoxalat 50 ml Ethanol zugegeben. Nach halbstündigem Nachrühren wird das Pigment abgetrennt, mit Wasser gewaschen und bei etwa 100 °C getrocknet.

Das so mit $(WO_3)_x$ und Natriumoxalat beschichtete Pigment wird eine halbe Stunde bei einer Temperatur von 600 °C einem Wasserstoff/Stickstoff-Gemisch im Volumenverhältnis 2,7:1 ausgesetzt und danach im Wasserstoff/Stickstoff-Strom abkühlen lassen. Man erhält ein helles stahlblaugraues Pigment mit hohem Deckvermögen und einer Beschichtung der formalen Zusammensetzung $NaWO_3$.

## Beispiel 1a

Man arbeitet analog Beispiel 1, reduziert jedoch bei einer Temperatur von 900 °C. Man erhält ein gelblich-graues Pigment mit hohem Deckvermögen.

## Beispiel 2

Man arbeitet analog Beispiel 1, beschichtet jedoch mit 0,22 g (1,64 mmol) Natriumoxalat anstelle von 0,33 g. Man erhält ein metallisch glänzendes Pigment mit stahlblau-grauer Farbe und einer Beschichtung der formalen Zusammensetzung $Na_{0,67}WO_3$.

## Beispiel 2a

Man arbeitet analog Beispiel 2, reduziert jedoch bei einer Temperatur von 900 °C. Man erhält ein dunkelgraues, metallisch glänzendes Pigment mit hohem Deckvermögen.

## Beispiel 3

Man arbeitet analog Beispiel 1, beschichtet jedoch mit 0,16 g (1,19 mmol) Natriumoxalat anstelle von 0,33 g. Man erhält ein metallisch glänzendes Pigment mit stahlblau-grauer Farbe und einer Beschichtung der formalen Zusammensetzung $Na_{0,5}WO_3$.

## Beispiel 3a

Man arbeitet analog Beispiel 3, reduziert jedoch bei einer Temperatur von 900 °C. Man erhält ein dunkelgraues, metallisch glänzendes Pigment mit hohem Deckvermögen.

## Beispiel 4

Man arbeitet analog Beispiel 1, beschichtet jedoch mit 0,13 g (0,9 mmol) Natriumoxalat anstelle von 0,33 g. Man erhält ein metallisch glänzendes Pigment mit stahlblau-grauer Farbe und einer Beschichtung der formalen Zusammensetzung $Na_{0,4}WO_3$.

## Beispiel 4a

Man arbeitet analog Beispiel 4, reduziert jedoch bei einer Temperatur von 900 °C. Man erhält ein dunkelgraues, metallisch glänzendes Pigment mit hohem Deckvermögen.

## Beispiel 5

Eine Suspension von 20 g Glimmer einer Teilchengröße von 10-50 μm in 300 ml Wasser wird mit 100 ml einer 0,15 molaren wässerigen Natriumwolframatlösung versetzt und mit 10 %iger Salzsäure auf einen pH-Wert von 4,5 eingestellt. Danach werden gleichzeitig 100 ml einer 1,5 molaren Natriumwolframatlösung und 100 ml einer 1,5 molaren Calciumchloridlösung zudosiert, die Mischung danach auf 85 °C erhitzt und noch 0,5 Stunden nachgerührt. Das mit Calciumwolframat beschichtete Pigment wird abgetrennt, gewaschen, getrocknet und eine halbe Stunde bei 700 °C einer Wasserstoff/Stickstoff-Atmosphäre ausgesetzt. Nach halbstündigem Abkühlen im Gasstrom erhält man ein blaß-graues, transparentes Pigment.

## Beispiel 6

Man arbeitet analog Beispiel 5, verwendet jedoch jeweils 200 ml der 1,5 molaren Natriumwolframat- und Calciumchloridlösung. Man erhält ein transparentes Pigment mit blauschwarzer Farbe.

## Beispiel 7

Man arbeitet analog Beispiel 5, verwendet jedoch jeweils 400 ml der 1,5 molaren Natriumwolframat- und Calciumchloridlösung. Man erhält ein transparentes Pigment mit blauviolettschwarzer Farbe.

## Beispiel 8

Man arbeitet analog Beispiel 5, setzt jedoch als Substrat Iriodin 225 ein (ein mit Titandioxid beschichtetes Glimmerpigment mit blauer Interferenzfarbe und einer Teilchengröße von 10-50 μm der E. Merck, Darmstadt). Man erhält ein Pigment mit hohem Glanz und grau-blauer Farbe.

## Beispiel 8a

Man arbeitet analog Beispiel 8, reduziert jedoch bei 600 °C. Man erhält ein Pigment mit hohem Glanz und blaßgrau-blauer Farbe.

**Beispiel 8b**

Man arbeitet analog Beispiel 8, reduziert jedoch bei 800 °C. Man erhält ein Pigment mit hohem Glanz und kornblumenblauer Farbe.

**Beispiel 8c**

Man arbeitet analog Beispiel 8, reduziert jedoch bei 900 °C. Man erhält ein Pigment mit hohem Glanz und schwarz-violetter Farbe.

**Beispiel 9**

15 g eines mit $TiO_2$ beschichteten Glimmerpigments, das in der $TiO_2$-Schicht geringe Mengen Natriumionen enthält (Timiron® Super Blue der Rona Pearl, USA) werden in einem Quarzrohr 30 Minuten bei 800 °C einem Wasserstoff/Stickstoff-Strom ($H_2 : N_2$ = 1:2,7) ausgesetzt. Man erhält ein glänzendes Pigment mit blaßgrauer Körper- und kornblumenblauer Interferenzfarbe.

**Beispiel 10**

Zu einer Suspension von 50 g Timiron® Super Blue in 1000 ml Ethanol werden innerhalb von 2 Stunden bei Raumtemperatur eine Lösung von 9,41 g (0,105 mol) Oxalsäure in 250 ml Ethanol sowie gleichzeitig eine Lösung von 13,8 ml 32 %iger wäßriger NaOH in 250 ml Ethanol getropft. Nach 15minütigem Nachrühren werden gleichzeitig innerhalb von 2 Stunden eine Lösung von 33 ml Triethanolamintitanat in 250 ml Ethanol und eine Lösung von 23 ml 32 %iger NaOH in 250 ml Ethanol zugegeben. Nach 30minütigem Nachrühren wird das Pigment abgetrennt, mit Ethanol gewaschen und 16 Stunden bei 100 °C getrocknet.
Durch 1/2stündige Reduktion im $H_2/N_2$-Strom ($H_2 : N_2$ = 1:2,7) bei 800 °C erhält man ein grau-violettes hochglänzendes Pigment.

**Beispiel 11**

Man arbeitet analog Beispiel 10.
Durch 1/2stündige Reduktion bei 900 °C erhält man ein schwarz-violettes hochglänzendes Pigment.

**Beispiel 12**

Zu einer Suspension von 50 g eines mit $TiO_2$ beschichteten Glimmerpigments (Iriodin® 100 Silberperl der E. Merck, Darmstadt) in 1000 ml Ethanol werden eine Lösung von 3,76 g (0,042 mol) Oxalsäure in 100 ml Ethanol sowie eine Lösung von 13 ml 32 %iger NaOH in 100 ml Ethanol innerhalb von 50 Minuten zudosiert. Nach 30minütigem Nachrühren wird das Pigment abgetrennt, mit Ethanol gewaschen und über Nacht bei 100 °C getrocknet.
Durch 30minütige Reduktion im $H_2/N_2$-Strom bei 800 °C erhält man ein blau-graues glänzendes Pigment.

**Beispiel 13**

Man arbeitet analog Beispiel 12. Durch Reduktion bei 900 °C erhält man ein taubenblaues glänzendes Pigment.

**Beispiel 14**

Zu einer Suspension von 50 g Iriodin® 100 in 1000 ml Wasser werden innerhalb von 75 Minuten bei Raumtemperatur eine Lösung von 9,45 g (0,105 mol) Oxalsäure in 150 ml Wasser und eine Lösung von 11,02 g $CaCl_2 . 2\,H_2O$ (0,075 mol) in 150 ml Wasser zugetropft. Nach 15minütigem Nachrühren werden innerhalb von 50 Minuten 160 ml einer 0,019 molaren wässerigen $TiCl_4$-Lösung zugegeben, wobei der pH-Wert durch gleichzeitige Zugabe von 10 %iger wässeriger NaOH-Lösung bei 2 gehalten wird. Nach 15minütigem Nachrühren wird das Pigment abgetrennt, mit Wasser gewaschen und über Nacht bei 100 °C getrocknet. Durch 30minütige Reduktion im $H_2/N_2$-Strom ($H_2 : N_2$ = 5,2:1) bei 900 °C erhält man ein silberraues glänzendes Pigment.

**Beispiel 15**

Zu einer Suspension von 50 g Iriodin® 100 in 1000 ml Wasser werden innerhalb von 75 Minuten gleichzeitig eine Lösung von 9,38 g (0,104 mol) Oxalsäure in 150 ml Wasser und eine Lösung von 15,13 g (0,074 mol) $MgCl_2 . 6\,H_2O$ in 150 ml Wasser zugetropft. Nach 15minütigem Nachrühren werden innerhalb von 50 Minuten 160 ml einer 0,019 molaren wässerigen $TiCl_4$-Lösung zugegeben, wobei durch gleichzeitiges Zudosieren von 10 %iger Natronlauge der pH-Wert konstant bei 2 gehalten wird. Nach weiteren 15 Minuten Rühren wird das Pigment abgetrennt, mit Wasser gewaschen und über Nacht bei 100 °C getrocknet.
Durch 30minütiges Reduzieren im $H_2/N_2$-Strom ($H_2 : N_2$ = 5,2:1) bei 900 °C erhält man ein silberraues hochglänzendes Pigment.

**Beispiel 16**

Zu einer Suspension von 50 g Iriodin® 103 (silberweißes Rutil/Glimmer-Pigment der E. Merck, Darmstadt) in 1000 ml Ethanol werden innerhalb von 50 Minuten gleichzeitig eine Lösung von 1,88 g (0,021 mol) Oxalsäure in 100 ml Ethanol und eine Lösung von 6,37 ml 32 %iger wässeriger NaOH in 100 ml Ethanol zugetropft, noch 30 Minuten nachgerührt und danach das Pigment abgetrennt, mit Ethanol gewaschen und über Nacht bei 100 °C getrocknet.

Durch Reduktion des Pigments für 30 Minuten bei 700 °C im $H_2/N_2$-Strom ($H_2:N_2$ = 1:2,7) erhält man ein silbergraues glänzendes Pigment.

Beispiel 17

Man arbeitet analog Beispiel 16, jedoch bei 850 °C. Man erhält ein dunkel silbergraues glänzendes Pigment.

Beispiel 18

Zu einer Suspension von 10 g Iriodin 225 in 50 ml wasserfreiem Toluol wurden unter Inertgasatmosphäre 20 ml einer 1,6 molaren n-Butyllithiumlösung in n-Hexan innterhalb 5 Min. bei Raumtemperatur zugetropft. Die Pigmentsuspension reagiert unter Erwärmen, Gasentwicklung und Blaufärbung. Nach beendeter Reaktion wird nicht umgesetztes n-Butyllithium durch Zugabe von 20 ml Methanol gelöst in 20 ml Toluol zerstört. Dann wird das Pigment abfiltriert, mit 100 ml Methanol und anschließend mit 500 ml VE-Wasser gewaschen und 2 h bei 100°C getrocknet. Man erhält auf diese Weise ein blau-graues Pigment.

**Patentansprüche**

1. Plättchenförmige Farbglanzpigmente auf der Basis von mit Metalloxiden beschichteten plättchenförmigen Substraten, dadurch gekennzeichnet, daß die Metalloxidbeschichtung zumindest teilweise aus einer Oxidbronze der Formel $M_xTO_n$, worin M ein elektropositives Metallelement der I., II., III. oder IV. Hauptgruppe oder der I., II. oder III. Nebengruppe, T ein Übergangsmetallelement der IV., V., VI., VII oder VIII. Nebengruppe x eine Zahl zwischen 0,01 und 1 und n eine Zahl zwischen 2 und 6 ist.

2. Plättchenförmige Farbglanzpigmente nach Anspruch 1, dadurch gekennzeichnet, daß die Oxidbronze in einer Menge von 0,1 bis 200 % bezogen auf das Ausgangsmaterial enthalten ist.

3. Plättchenförmige Farbglanzpigmente nach Anspruch 1, dadurch gekennzeichnet, daß M eines oder mehrere Elemente aus der Gruppe Lithium, Natrium, Kalium, Kupfer, Silber, Kalzium, Strontium, Barium, Zink, Cadmium, Aluminium, Indium, Lanthan und den Seltenerdmetallen sowie $NH_4^+$ bedeutet.

4. Plättchenförmige Farbglanzpigmente nach Anspruch 1, dadurch gekennzeichnet, daß der Wert x für Elemente der I. Haupt- und Nebengruppe zwischen 0,1 und 1, für Elemente der II. Haupt- und Nebengruppe zwischen 0,05 und 0,5, für Elemente der III. Haupt- und Nebengruppe zwischen 0,01 und 0,3 und für Elemente der IV. Hauptgruppe zwischen 0,01 und 0,2 liegt.

5. Plättchenförmige Farbglanzpigmente nach Anspruch 1, dadurch gekennzeichnet, daß T eines oder mehrere Elemente der Gruppe Titan, Vanadium, Niob, Molybdän, Wolfram, und Mangan bedeutet.

6. Verfahren zur Herstellung von plättchenförmigen Farbglanzpigmenten, dadurch gekennzeichnet, daß ein plättchenförmiges Substrat mit einer Oxidbronze der Formel $M_xTO_n$, worin M ein elektropositives Metallelement der I., II., III. oder IV. Hauptgruppe oder der I., II. oder III. Nebengruppe, T ein Übergangselement der IV., V., VI., VII. oder VIII. Nebengruppe, x eine Zahl zwischen 0,01 und 1 und n eine Zahl zwischen 2 und 6 ist, beschichtet wird.

7. Verfahren nach Anspruch 6, dadurch gekennzeichnet, daß in einer Suspension eines plättchenförmigen Substrats gleichzeitig oder nacheinander ein Übergangsmetalloxid $TO_n$ und ein Oxid, Hydroxid oder Salz des elektropositiven Metalls M auf dem plättchenförmigen Substrat niedergeschlagen wird, das so beschichtete Substrat abgetrennt, gegebenenfalls gewaschen und getrocknet und danach bei einer Temperatur von etwa 300-1200 °C einem reduzierenden Gasstrom ausgesetzt wird.

**Claims**

1. Lamellar colour lustre pigments based on lamellar substrates coated with metal oxides, characterized in that the metal oxide coating [lacuna], at least in part, of an oxide bronze of the formula $M_xTO_n$ in which M is an electropositive metal element of the I, II, III or IV main group or of the I, II or III subgroup, T is a transition metal element of the IV, V, VI, VII or VIII subgroup, x is a number between 0.01 and 1 and n is a number between 2 and 6.

2. Lamellar colour lustre pigments according to Claim 1, characterized in that the oxide bronze is present in a proportion of 0.1 to 200%, relative to the starting material.

**3.** Lamellar colour lustre pigments according to Claim 1, characterized in that M is one or more elements belonging to the group consisting of lithium, sodium, potassium, copper, silver, calcium, strontium, barium, zinc, cadmium, aluminium, indium, lanthanum and the rare-earth metals and also $NH^+$.

**4.** Lamellar colour lustre pigments according to Claim 1, characterized in that the value x is between 0.1 and 1 for elements of the I main group and subgroup, between 0.05 and 0.5 for elements of the II main group and subgroup, between 0.01 and 0.3 for elements of the III main group and subgroup and between 0.01 and 0.2 for elements of the IV main group.

**5.** Lamellar colour lustre pigments according to Claim 1, characterized in that T is one or more elements of the group comprising titanium, vanadium, niobium, molybdenum, tungsten and manganese.

**6.** Process for the preparation of lamellar colour lustre pigments, characterized in that a lamellar substrate is coated with an oxide bronze of the formula $M_xTO_n$ in which M is an electropositive metal element of the I, II, III or IV main group or of the I, II or III subgroup, T is a transition element of the IV, V, VI, VII or VIII subgroup, x is a number between 0.01 and 1 and n is a number between 2 and 6.

**7.** Process according to Claim 6, characterized in that in a suspension of a lamellar substrate a transition metal oxide $TO_n$ and an oxide, hydroxide or salt of the electropositive metal M are deposited simultaneously or successively on the lamellar substrate, and the substrate coated in this way is separated off, washed, if appropriate, and dried and then exposed to a reducing gas stream at a temperature of about 300-1,200°C.

**Revendications**

**1.** Pigments lustrants lamellaires à base de substrats lamellaires revêtus d'oxydes métalliques, caractérisés en ce que le revêtement d'oxyde métallique est au moins pour partie composé d'un bronze d'oxyde de formule $M_xTO_n$, où M est au moins un élément métallique électropositif du groupe principal I, II, III ou IV ou du groupe secondaire I, II ou III, T est au moins un élément de transition du groupe secondaire IV, V, VI, VII ou VIII, x est un nombre compris entre 0,01 et 1 et n est un nombre compris entre 2 et 6.

**2.** Pigments lustrants lamellaires selon la revendication 1, caractérisés en ce que le bronze d'oxyde est présent en une quantité de 0,1 à 200% par rapport à la matière première.

**3.** Pigments lustrants lamellaires selon la revendication 1, caractérisés en ce que M désigne un ou plusieurs éléments choisis parmi le lithium, le sodium, le potassium, le cuivre, l'argent, le calcium, le strontium, le baryum, le zinc, le cadmium, l'aluminium, l'indium, le lanthane et les métaux des terres rares, ainsi que $NH_4^+$.

**4.** Pigments lustrants lamellaires selon la revendication 1, caractérisés en ce que la valeur x se situe pour les éléments du groupe principal et secondaire I entre 0,1 et 1, pour les éléments du groupe principal et secondaire II entre 0,05 et 0,5, pour les éléments du groupe principal et secondaire III entre 0,01 et 0,3 et pour les éléments du groupe principal IV entre 0,01 et 0,2.

**5.** Pigments lustrants lamellaires selon la revendication 1, caractérisés en ce que T désigne un ou plusieurs éléments choisis parmi le titane, le vanadium, le niobium, le molybdène, le tungstène et le manganèse.

**6.** Procédé pour la préparation de pigments lustrants lamellaires, caractérisé en ce qu'on revêt un substrat lamellaire avec un bronze d'oxyde de formule $M_xTO_n$, où M est au moins un élément métallique électropositif du groupe principal I, II, III ou IV ou du groupe secondaire I, II ou III, T est au moins un élément de transition du groupe secondaire IV, V, VI, VII ou VIII, x est un nombre compris entre 0,01 et 1 et n est un nombre compris entre 2 et 6.

**7.** Procédé selon la revendication 6, caractérisé en ce que dans une suspension d'un substrat lamellaire on dépose simultanément ou consécutivement un oxyde de métal de transition $TO_n$ et un oxyde, hydroxyde ou sel du métal électropositif M sur le substrat lamellaire, on sépare le substrat ainsi revêtu, éventuellement on lave et on sèche et ensuite on soumet à un courant de gaz réducteur à une température d'environ 300-1200°C.